# EUROPEAN PATENT SPECIFICATION

(11) **EP 3 556 574 B1**
(45) Date of publication and mention of the grant of the patent: **27.05.2020**
(21) Application number: 19168075.0
(22) Date of filing: 09.04.2019
(51) Int. Cl.: B60C 11/03, B60C 11/13, B60C 11/12

(54) **TIRE**
REIFEN
PNEUMATIQUE

(30) Priority: 17.04.2018 JP 2018079301
(43) Date of publication of application: 23.10.2019
(73) Proprietor: Sumitomo Rubber Industries, Ltd., Kobe-shi, Hyogo-ken 651-0072 (JP)
(72) Inventor: HOSHINO, MADOKA, Kobe-shi, Hyogo-ken, 651-0072 (JP)
(74) Representative: Manitz Finsterwald Patent- und Rechtsanwaltspartnerschaft mbB

(56) References cited:
- EP-A1- 2 818 334
- EP-A2- 2 463 122
- JP-A- H0 640 215

## Description

### BACKGROUND OF THE INVENTION

### Field of the Invention

The present invention relates to a tire having improved uneven wear resistance.

### Description of the Background Art

A tread pattern, in which tilted main grooves each extending toward a tire equator while decreasing an angle thereof with respect to a tire circumferential direction are used instead of circumferential main grooves extending in the tire circumferential direction, has been proposed (see, for example, Japanese Laid-Open Patent Publication Nos. H08-2217 and 2001-206017).

In this tread pattern, the tilted main grooves are tilted in a shape close to a water flow line, and thus excellent drainage performance can be exhibited while the number of axial grooves formed is decreased (or axial grooves are eliminated). Therefore, the tread pattern has an advantage in that steering stability and noise performance can be improved while wet performance is maintained.

However, in a block between the tilted main grooves adjacent to each other in the tire circumferential direction, the block width is small at an end portion at the tire equator side, so that the stiffness becomes ununiformly small. Therefore, uneven wear is likely to occur near the end portion. Particularly, in the case where a center land portion that is a land portion between the tilted main grooves provided at both sides of the tire equator is formed by a rib continuously extending in the tire circumferential direction, the stiffness difference between the block and the rib is increased, so that uneven wear more prominently occurs.

The present invention has been made in view of the above circumstances, and an object of the present invention is to provide a tire having improved uneven wear resistance at a tread pattern having tilted main grooves.

A tire providing tilted main grooves to prevent uneven wear and showing the preamble of claim 1 is known from EP-A2-2 463 122.

A point symmetry tread pattern with tilted main grooves is further shown in EP-A1-2 818 334 A1 or in JP H06 40215 A.

### SUMMARY OF THE INVENTION

The present invention is directed to a tire having a tread portion in which a first tread pattern portion provided at one side with respect to a tire equator in a tire axial direction and a second tread pattern portion provided at another side with respect to the tire equator in the tire axial direction have a relationship of point symmetry, wherein
each of the first and second tread pattern portions has
a shoulder main groove extending in a tire circumferential direction, and
tilted main grooves each having an outer end portion connected to the shoulder main groove, extending toward the tire equator while being tiled relative to the tire circumferential direction, and having an inner end portion terminating without intersecting the tire equator, and
a center sipe having shallow portions and a deep portion penetrates between each tilted main groove provided on the first tread pattern portion and each tilted main groove provided on the second tread pattern portion.

In the tire according to the present invention, each tilted main groove preferably extends toward the tire equator while decreasing an angle θ thereof with respect to the tire circumferential direction.

In the tire according to the present invention, preferably, the shallow portions of the center sipe are connected to the shoulder main grooves, and the deep portion of the center sipe connects the shallow portions to each other.

In the tire according to the present invention, each of the first and second tread pattern portions preferably has, between the tilted main grooves adjacent to each other in the tire circumferential direction, a connection groove that connects the inner end portion of one tilted main groove of the adjacent tilted main grooves to the other tilted main groove of the adjacent tilted main grooves.

In the tire according to the present invention, the connection groove preferably has a first groove portion at which a groove depth is increased toward the inner end portion.

In the tire according to the present invention, each tilted main groove preferably has, at the outer end portion, a narrow portion at which a groove width is decreased.

In the tire according to the present invention, each tilted main groove preferably has, at the outer end portion, a projection portion that projects from a groove bottom.

In the tire according to the present invention, each of the first and second tread pattern portions preferably has, between the tilted main grooves adjacent to each other in the tire circumferential direction, a tilted sipe that extends from the shoulder main groove along the tilted main grooves.

In the present invention, each tilted main groove provided on the first tread pattern portion and each tilted main groove provided on the second tread pattern portion are connected to each other by the center sipe having the shallow portions and the deep portion. Therefore, the stiffness difference between a center land portion and a block-like portion between the tilted main grooves adjacent to each other in the tire circumferential direction can be decreased, thereby allowing the stiffness to be made appropriate, so that uneven wear can be inhibited.

### BRIEF DESCRIPTION OF THE DRAWINGS

FIG. 1 is a development of a tread portion of a tire according to an embodiment of the present invention;
FIG. 2 is a partially enlarged view of a first tread pattern portion;
FIG. 3 is a partially enlarged view of a center land portion;
FIG. 4(A) is an enlarged perspective view showing a connection groove;
FIG. 4(B) is a C-C cross-sectional view of FIG. 3, showing the connection groove;
FIG. 5(A) is an enlarged plan view showing an outer end portion of a tilted main groove;
FIG. 5(B) is an A-A cross-sectional view of FIG. 5(A), showing the outer end portion; and
FIG. 6 is a B-B cross-sectional view of FIG. 3, showing a center sipe.

### DESCRIPTION OF THE PREFERRED EMBODIMENTS

Hereinafter, an embodiment of the present invention will be described with reference to the drawings.

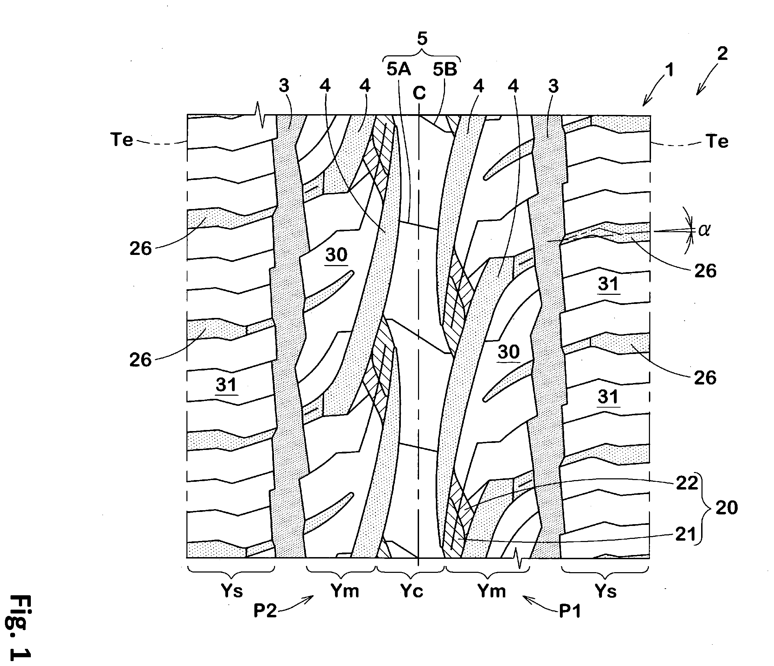

FIG. 1 is a development of a tread portion 2 of a tire 1 showing the embodiment of the present invention. The tire 1 can be used as various tires such as a pneumatic tire for a passenger car, a heavy-duty pneumatic tire, and a non-pneumatic tire the interior of which is not filled with pressurized air. In this example, the case where the tire 1 is formed as an all terrain tire (AT tire) for a passenger car is described.

As shown in FIG. 1, in the tread portion 2, a first tread pattern portion P1 that is provided at one side with respect to a tire equator C in the tire axial direction and a second tread pattern portion P2 that is provided at the other side with respect to the tire equator C in the tire axial direction have a relationship of point symmetry. The "relationship of point symmetry" also includes the case where a pattern element of the first tread pattern portion P1 and a pattern element of the second tread pattern portion P2 have a relationship that deviates from a relationship of complete point symmetry, for example, due to a variable pitch method or the like.

Each of the first and second tread pattern portions P1 and P2 has one shoulder main groove 3 extending in the tire circumferential direction and a plurality of tilted main grooves 4 provided so as to be spaced apart from each other in the tire circumferential direction.

The tilted main grooves 4 provided on the first tread pattern portion P1 and the tilted main grooves 4 provided on the second tread pattern portion P2 are connected to each other by center sipes 5 crossing the tire equator C.

In the present specification, a region between the tilted main grooves 4 provided on the first tread pattern portion P1 and the tilted main grooves 4 provided on the second tread pattern portion P2 is sometimes referred to as a center land portion Yc. In addition, a region between the center land portion Yc and each shoulder main groove 3 is sometimes referred to as a middle land portion Ym, and a region between each shoulder main groove 3 and a tread edge Te is sometimes referred to as a shoulder land portion Ys.

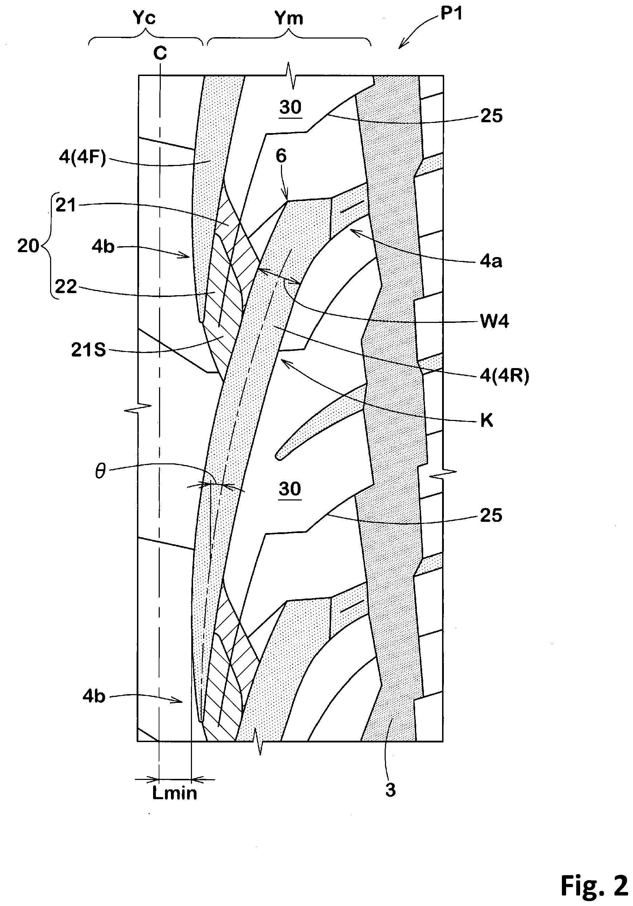

FIG. 2 representatively shows the shoulder main groove 3 and the tilted main grooves 4 on the first tread pattern portion P1. As shown in FIG. 2, in this example, the shoulder main groove 3 is a zigzag groove that extends in the tire circumferential direction while bending in a zigzag manner, and edge components are increased therein, whereby traction performance on an uneven terrain road surface and the like is enhanced. The shoulder main groove 3 may be formed as a linear groove. The groove width and the groove depth of the shoulder main groove 3 are set as appropriate in a conventional manner.

Each tilted main groove 4 extends from an outer end portion 4a thereof connected to the shoulder main groove 3, toward the tire equator C, while being tilted relative to the tire circumferential direction. In addition, an inner end portion 4b of the tilted main groove 4 terminates near the tire equator C without intersecting the tire equator C. A minimum distance Lmin between the tilted main groove 4 and the tire equator C is not particularly limited, but is preferably in the range of 15 to 25 mm.

Each tilted main groove 4 preferably extends toward the tire equator C while decreasing an angle θ of a groove center line thereof with respect to the tire circumferential direction. From the viewpoint of drainage performance, each tilted main groove 4 is particularly preferably a curved groove having an angle θ gradually decreasing toward the tire equator C. At the inner end portion 4b, the angle θ is preferably not greater than 15 degrees and further preferably not greater than 10 degrees, from the viewpoint of drainage performance and noise performance. In addition, at the outer end portion 4a, the angle θ is preferably not less than 50 degrees and further preferably not less than 60 degrees, from the viewpoint of steering stability and traction performance on an uneven terrain road surface, etc.

Such tilted main grooves 4 are tilted in a shape close to a water flow line, and thus excellent drainage performance can be exhibited while the number of axial grooves formed is decreased (or axial grooves are eliminated). Therefore, steering stability and noise performance can be improved while excellent wet performance is maintained.

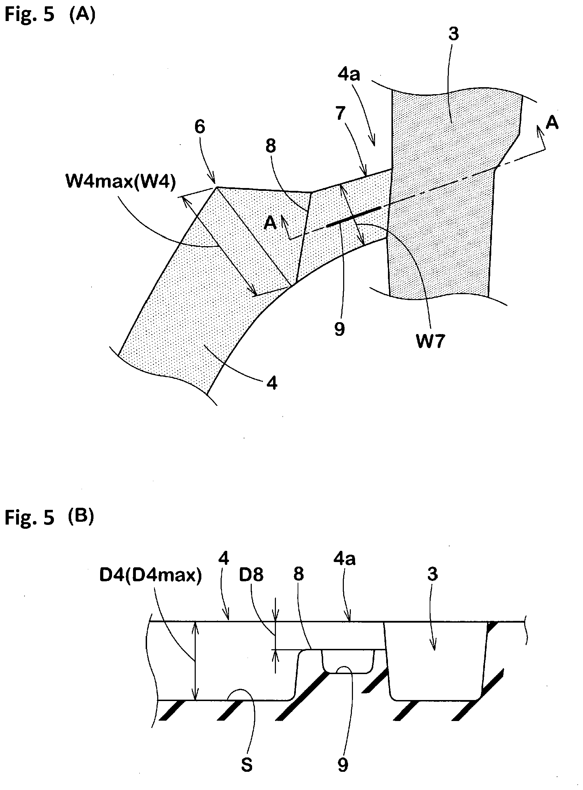

Each tilted main groove 4 in this example has a maximum width portion 6 at the outer end portion 4a side, and a groove width W4 of the tilted main groove 4 gradually decreases from the maximum width portion 6 toward the inner end portion 4b. As shown in FIG. 5(A), the tilted main groove 4 has, at the outer end portion 4a, a narrow portion 7 at which the groove width W4 is decreased as compared to that at the maximum width portion 6. A groove width W7 at the narrow portion 7 is preferably in the range of 0.3 to 0.7 times of a groove width W4max at the maximum width portion 6 (the maximum width of the tilted main groove 4).

As shown in FIG. 5(B), the tilted main groove 4 has, at the outer end portion 4a, a projection portion 8 that projects from a groove bottom S. A groove depth D8 at the projection portion 8 is preferably in the range of 0.5 to 0.8 times of a maximum depth D4max of the tilted main groove 4. In this example, a groove depth D4 of the tilted main groove 4 is substantially uniform at the positions other than the projection portion 8. A sipe 9 extending in the groove length direction is provided on the upper surface of the projection portion 8. Both ends of the sipe 9 terminate within the projection portion 8 in this example.

As shown in FIG. 2, the middle land portion Ym is partitioned into a plurality of block-like portions 30 by the tilted main grooves 4, and the block-like portions 30 adjacent to each other in the tire circumferential direction can support each other since the narrow portion 7 is formed at the outer end portion 4a of each tilted main groove 4. Therefore, deformation of the block-like portions 30 is inhibited, so that uneven wear resistance can be improved. Similarly, since the projection portion 8 is formed at the outer end portion 4a of each tilted main groove 4, deformation of the block-like portions 30 is inhibited, so that uneven wear resistance can be improved.

In the case where the groove width W7 at the narrow portion 7 exceeds 0.7 times of the maximum width W4max of the tilted main groove 4, or in the case where the groove depth D8 at the projection portion 8 exceeds 0.8 times of the maximum depth D4max of the tilted main groove 4, the effect of inhibiting deformation of the block-like portions 30 is excessively diminished, so that it is difficult to sufficiently achieve the uneven wear resistance improving effect. On the other hand, in the case where the groove width W7 is less than 0.3 times of the maximum width W4max, or in the case where the groove depth D8 is less than 0.5 times of the maximum depth D4max, a decrease in drainage performance is caused.

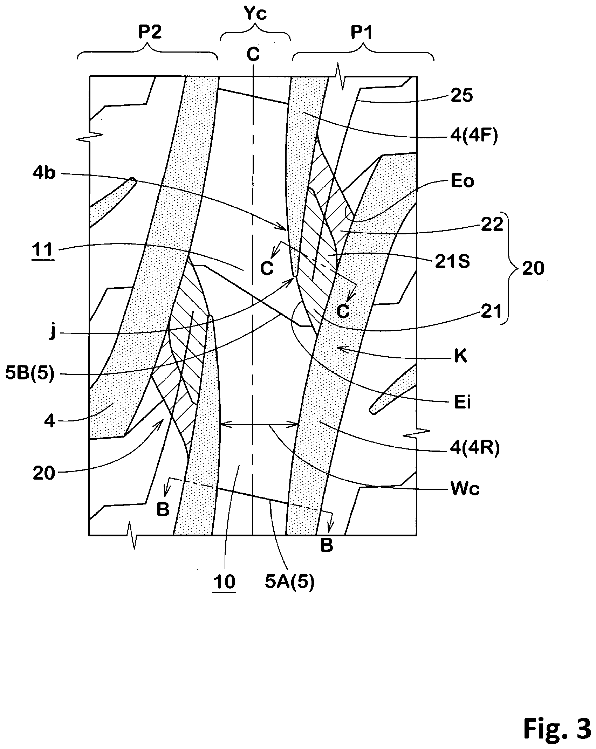

As shown in FIG. 3, the center land portion Yc is penetrated by the center sipes 5 crossing the tire equator C.

The center land portion Yc continuously extends in the tire circumferential direction while increasing and decreasing a land portion width Wc thereof. The respective center sipes 5 are provided at the position of each recess portion 10 at which the land portion width Wc is at its minimum and at the position of each projection portion 11 at which the land portion width Wc is at its maximum. Both ends of each center sipe 5 are respectively connected to the tilted main groove 4 provided on the first tread pattern portion P1 and the tilted main groove 4 provided on second tread pattern portion P2. Accordingly, the tilted main grooves 4 provided on the first tread pattern portion P1 and the tilted main grooves 4 provided on the second tread pattern portion P2 are alternately connected to each other in this example. The center sipes 5 are preferably titled in a tilt direction different from that of the tilted main grooves 4.

For the sake of convenience, the center sipe 5 provided at the position of each recess portion 10 and the center sipe 5 provided at the position of each projection portion 11 are sometimes referred to as a first center sipe 5A and a second center sipe 5B and distinguished from each other. The center sipes 5 may be composed of only first center sipes 5A (provided on the recess portions 10), or may be composed of only second center sipes 5B (provided on the projection portions 11).

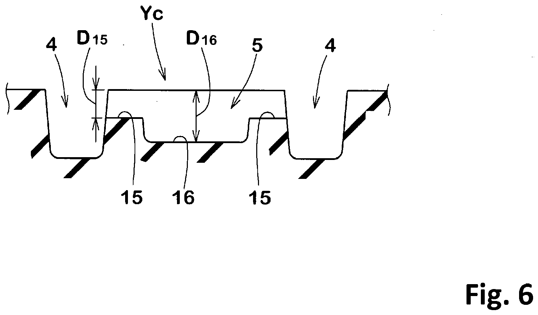

As shown in FIG. 6, each center sipe 5 has shallow portions 15 and a deep portion 16 and extends in the length direction thereof. In this example, the shallow portions 15 are connected to the tilted main grooves 4, and the deep portion 16 connects the shallow portions 15, 15 to each other. A sipe depth D₁₅ of each shallow portion 15 is preferably in the range of 0.5 to 0.8 times of a sipe depth D₁₆ of the deep portion 16.

Since the center sipes 5 penetrate the center land portion Yc and each have the shallow portions 15 and the deep portion 16 as described above, the stiffness difference between the center land portion Yc and each middle land portion Ym can be decreased, thereby allowing the stiffness to be made appropriate, so that uneven wear can be inhibited. In the case where the depth of each center sipe 5 is uniform, wrinkles occur in the center land portion Yc, adversely affecting uneven wear resistance. However, in particular, since the shallow portions 15 are provided at both end portions of each center sipe 5, the wrinkles can be effectively prevented, so that uneven wear resistance can be further improved.

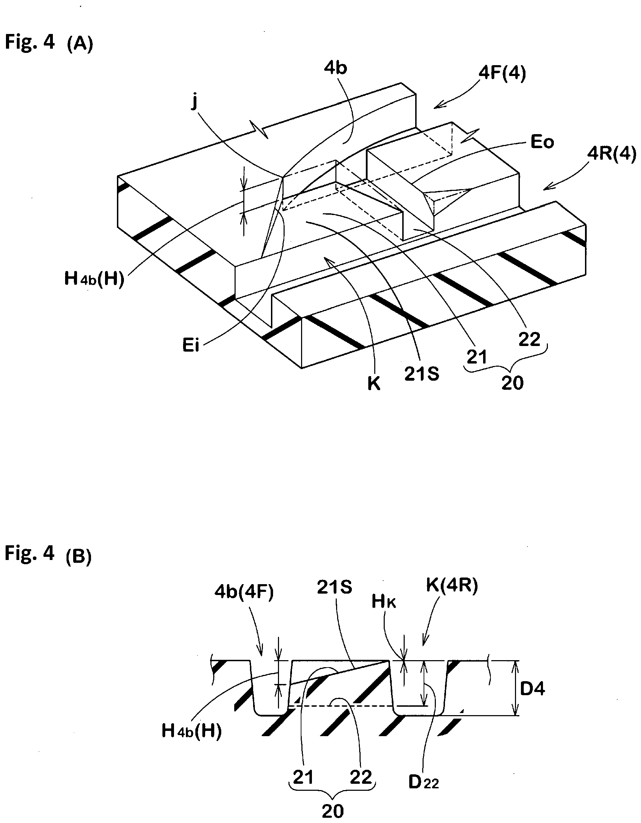

As shown in FIGS. 3, 4(A), and 4(B), a connection groove 20 is provided between the tilted main grooves 4, 4 adjacent to each other in the tire circumferential direction. For clarification, one tilted main groove of the tilted main grooves 4 adjacent to each other in the tire circumferential direction and the other tilted main groove thereof are sometimes designated by 4F and 4R and distinguished from each other.

As shown in FIGS. 3, 4(A), and 4(B), the connection groove 20 connects the inner end portion 4b of the one tilted main groove 4F and an opposing portion K of the other tilted main groove 4R to each other. The "opposing portion K" means a part of the tilted main groove 4R that opposes the inner end portion 4b of the tilted main groove 4F inward and outward in the tire axial direction, and the position closest to an end j of the inner end portion 4b is included in the opposing portion K.

The connection groove 20 has a first groove portion 21 that extends from the opposing portion K of the tilted main groove 4R toward the inner end portion 4b of the tilted main groove 4F while increasing a groove depth H thereof. In this example, the case where a second groove portion 22 is further formed on a bottom surface 21S of the first groove portion 21 is shown.

At the first groove portion 21, a groove depth H_{4b} at the inner end portion 4b is larger than a groove depth Hₖ at the opposing portion K. As long as H_{4b}>H_{K}, the groove depth Hₖ may be 0 mm, as in this example. In addition, the groove depth H_{4b} is preferably not less than 0.3 times, and further preferably not less than 0.6 times, of the groove depth D4 of the tilted main groove 4R. The bottom surface 21S of the first groove portion 21 is preferably a flat surface that is tilted in the length direction thereof with a constant gradient.

A side edge Ei, at the tire equator C side, of the first groove portion 21 extends from the end j of the inner end portion 4b so as to be tilted relative to the tire circumferential direction.

The second groove portion 22 also extends on the bottom surface 21S along a side edge Eo, at the shoulder main groove 3 side, of the first groove portion 21. In this example, the second groove portion 22 has a uniform groove depth D₂₂. The groove depth D₂₂ is not less than the groove depth H_{4b} and preferably not greater than the groove depth D4 of the tilted main groove 4.

In the tire 1 having the tilted main grooves 4, a groove width 4W of each tilted main groove 4 is decreased at the inner end portion 4b. Thus, there is a problem that stone trapping is likely to occur at the inner end portion 4b. However, since the connection groove 20 connected to the inner end portion 4b is provided, stones are allowed to easily move and thus are easily discharged, so that stone trapping resistance can be improved. In particular, since the first groove portion 21 at which the groove depth H is decreased toward the inner end portion 4b is provided, stone dischargeability is further enhanced. When the groove depth H_{4b} is less than 0.5 times of the groove depth D4, the stone trapping resistance improving effect tends to be diminished.

As shown in FIG. 2, on the middle land portion Ym, a tilted sipe 25 extending from the shoulder main groove 3 along the tilted main grooves 4 is provided between the tilted main grooves 4, 4 adjacent to each other in the tire circumferential direction. In this example, an inner end portion of the tilted sipe 25 terminates on the bottom surface 21 S of the first groove portion 21. The tilted sipe 25 increases edge components and enhances traction performance on an uneven terrain road surface or the like. In addition, the tilted sipe 25 serves to prevent the stiffness of the block-like portions 30 from locally increasing and improve uneven wear resistance.

A plurality of shoulder axial grooves 26 are provided on each shoulder land portion Ys so as to be spaced apart from each other in the tire circumferential direction. The shoulder axial grooves 26 extend from the tread edge Te to the shoulder main groove 3 and partition the shoulder land portion Ys into a plurality of blocks 31.

Each shoulder axial groove 26 in this example is formed as a zigzag groove that extends in the length direction thereof while bending in a zigzag manner. In addition, an angle α of each shoulder axial groove 26 with respect to the tire axial direction is set to be not greater than 15 degrees and preferably not greater than 10 degrees. The angle α is defined as an angle formed with respect to the tire axis by a straight line x passing through both ends of a groove center line of the shoulder axial groove 26.

When the angle α is set to be not greater than 15 degrees, the shoulder axial grooves 26 in this example can enhance grip performance on an uneven terrain road surface and improve steering stability. In the case where the angle α is set to be not greater than 15 degrees, pitch sounds during running on a dry road surface are increased, causing a disadvantage in noise performance. However, in this example, since the shoulder axial grooves 26 are formed as zigzag grooves, input upon impact can be distributed, thereby inhibiting an increase in pitch sound (impact sound). In addition, when the shoulder axial grooves 26 are formed as zigzag grooves, the shoulder axial grooves 26 can also contribute to improvement of steering stability on an uneven terrain road surface.

In this example, each tilted main groove 4 is connected to the shoulder axial groove 26 via the shoulder main groove 3. Thus, the tilted main groove 4 and the shoulder axial groove 26 serve as one groove and can contribute to improvement of wet performance and steering stability on an uneven terrain road surface.

Although the particularly preferred embodiment of the present invention has been described in detail above, the present invention is not limited to the shown embodiment, and various modifications can be made within the scope of the appended claims.

### EXAMPLES

Pneumatic tires for a SUV (265/70R17) having the basic pattern in FIG. 1 were produced as samples on the basis of specifications in Table 1. Uneven wear resistance and stone trapping resistance of each test tire were tested.

Each tire is substantially the same in shoulder main grooves, tilted main grooves, and shoulder axial grooves, but differs from each other only in the specifications described in Table 1. Each tilted main groove extends toward the tire equator while gradually decreasing an angle θ of a groove center line thereof with respect to the tire circumferential direction, the angle θ at the outer end portion thereof is 60 degrees, and the angle θ at the inner end portion thereof is 5 degrees. At each center sipe, in the case where "shallow portions" are present, a sipe depth D₁₅ of each shallow portion is 0.5 times of a sipe depth D₁₆ of a deep portion. In addition, "uniform depth" at the center sipe means that the center sipe is formed by only a deep portion.

### <Uneven Wear Resistance>

Using a test tire mounted on a rim (17×7.5) and inflated to an internal pressure (220 kPa), ratios U1/U2 of wear energy U1 at the rear side of a block-like portion of the middle land portion relative to wear energy U2 at the front side of the block-like portion at the time of braking and at the time of driving were calculated with a wear energy measurement instrument. Then, likelihood of occurrence of uneven wear (heel & toe wear) at the block-like portion was evaluated on the basis of the ratios U1/U2 at the time of braking and at the time of driving. The evaluation result is shown as an index defined with the result of Comparative Example 1 being set as 100. A higher value indicates that uneven wear is less likely to occur and the result is better.

### <Stone Trapping Resistance>

The above test tires were mounted to all the wheels of a four-wheel-drive vehicle (an engine displacement of 2400 cc), the vehicle ran on a gravel road at a low speed for 1000 m, and the number of stones trapped in the end portions of the tilted main grooves was evaluated. The evaluation result is shown as an index defined with the result of Comparative Example 1 being set as 100. A higher value indicates that the number of stones trapped is smaller and stone trapping resistance is better.

**[Table 1]**

| | Example 1 | Example 2 | Example 3 | Example 4 | Example 5 | Example 6 | Comparative Example 1 |
|---|---|---|---|---|---|---|---|
| <Center land portion> | | | | | | | |
| Center sipe | Present | | | | | | |
| *1 | (Penetration) | | | | | | (Non-penetration) |
| • Depth of sipe | Shallow portions at both ends | | | | | | Uniform depth |

| <Middle land portion> | | | | | | | |
|---|---|---|---|---|---|---|---|
| Connection groove (first groove portion) | Present | Absent | Present | Present | Present | Absent | Absent |
| *2 | (Penetration) | - | (Non-penetration) | (Penetration) | (Penetration) | - | - |
| H4b | 6.5 | 0 | 6.5 | 6.5 | 8.5 | 0 | 0 |
| H4b/D4max | 0.68 | 0 | 0.68 | 0.68 | 0.9 | 0 | 0 |
| Tilted main groove | | | | | | | |
| • Narrow portion of outer end portion | Present | | | | | | Absent |
| ·· W7/W4max | 0.5 | | | 0.3 | | | 1 |
| • Projection portion of outer end portion | Present | | | | | | Absent |
| ·· D8/D4max | 0.5 | | | 0.3 | | | 1 |
| Uneven wear res istance | 120 | 115 | 115 | 125 | 125 | 125 | 100 |
| Stone trapping resistance | 120 | 105 | 110 | 120 | 130 | 100 | 100 |

| | | | | | | | |
|---|---|---|---|---|---|---|---|
| *1) A center sipe that penetrates the center land portion is referred to as Penetration, and a center sipe that does not penetrate the center land portion is referred to as Non-penetration. *2) A connection groove (first groove portion) that penetrates between tilted main grooves is referred to as Penetration, and a connection groove (first groove portion) that does not penetrate between tilted main grooves is referred to as Non-penetration. | | | | | | | |

As shown in Table 1, it is confirmed that the tire of each Example can improve uneven wear resistance at the tread pattern having the tilted main grooves. In addition, it is confirmed that by providing the connection grooves, stone trapping resistance can be improved.

## Claims

1. A tire (1) having a tread portion in which a first tread pattern portion (P1) provided at one side with respect to a tire equator (C) in a tire axial direction and a second tread pattern portion (P2) provided at another side with respect to the tire equator (C) in the tire axial direction have a relationship of point symmetry, wherein
each of the first and second tread pattern portions (P1, P2) has
a shoulder main groove (3) extending in a tire circumferential direction, and
tilted main grooves (4) each having an outer end portion (4a) connected to the shoulder main groove (3), extending toward the tire equator (C) while being tiled relative to the tire circumferential direction, and having an inner end portion (4b) terminating without intersecting the tire equator (C), and said tire being **characterized by**
a center sipe (5) having shallow portions (15) and a deep portion (16) penetrates between each tilted main groove (4) provided on the first tread pattern portion (P1) and each tilted main groove (4) provided on the second tread pattern portion (P2).

2. The tire (1) according to claim 1, wherein each tilted main groove (4) extends toward the tire equator (C) while decreasing an angle θ thereof with respect to the tire circumferential direction.

3. The tire (1) according to claim 1 or 2, wherein the shallow portions (15) of the center sipe (5) are connected to the shoulder main grooves (3), and the deep portion (16) of the center sipe (5) connects the shallow portions (15) to each other.

4. The tire (1) according to any one of claims 1 to 3, wherein each of the first and second tread pattern portions (P1, P2) has, between the tilted main grooves (4) adjacent to each other in the tire circumferential direction, a connection groove (20) that connects the inner end portion (4b) of one tilted main groove (4) of the adjacent tilted main grooves (4) to the other tilted main groove (4) of the adjacent tilted main grooves (4).

5. The tire (1) according to claim 4, wherein the connection groove (20) has a first groove portion (21) at which a groove depth (H) is increased toward the inner end portion (4b).

6. The tire (1) according to any one of claims 1 to 5, wherein each tilted main groove (4) has, at the outer end portion (4a), a narrow portion (7) at which a groove width (W4) is decreased.

7. The tire (1) according to any one of claims 1 to 6, wherein each tilted main groove (4) has, at the outer end portion (4a), a projection portion (8) that projects from a groove bottom (S).

8. The tire (1) according to any one of claims 1 to 7, wherein each of the first and second tread pattern portions (P1, P2) has, between the tilted main grooves (4) adjacent to each other in the tire circumferential direction, a tilted sipe (25) that extends from the shoulder main groove (3) along the tilted main grooves (4).

## Patentansprüche

1. Reifen (1) mit einem Laufflächenabschnitt, bei dem ein erster Laufflächenprofilabschnitt (P1), der an einer Seite in Bezug auf einen Reifenäquator (C) in einer Reifenaxialrichtung vorgesehen ist, und ein zweiter Laufflächenprofilabschnitt (P2), der an einer anderen Seite in Bezug auf den Reifenäquator (C) in der Reifenaxialrichtung vorgesehen ist, eine punktsymmetrische Beziehung aufweisen, wobei
jeder der ersten und zweiten Laufflächenprofilabschnitte (P1, P2) aufweist
eine Schulterhauptrille (3), die sich in einer Reifenumfangsrichtung erstreckt, und
geneigte Hauptrillen (4), von denen jede einen äußeren Endabschnitt (4a) aufweist, der mit der Schulterhauptrille (3) verbunden ist, sich in Richtung des Reifenäquators (C) erstreckt, während sie relativ zur Reifenumfangsrichtung geneigt ist, und einen inneren Endabschnitt (4b) aufweist, der endet, ohne den Reifenäquator (C) zu schneiden, und der Reifen **gekennzeichnet ist durch**
einen Mittelfeinschnitt (5), der flache Abschnitte (15) und einen tiefen Abschnitt (16) aufweist, zwischen jeder geneigten Hauptrille (4), die auf dem ersten Laufflächenprofilabschnitt (P1) vorgesehen ist, und jeder geneigten Hauptrille (4), die auf dem zweiten Laufflächenprofilabschnitt (P2) vorgesehen ist, eindringt.

2. Reifen (1) nach Anspruch 1, wobei sich jede geneigte Hauptrille (4) in Richtung des Reifenäquators (C) erstreckt, während sie einen Winkel θ davon in Bezug auf die Reifenumfangsrichtung verkleinert.

3. Reifen (1) nach Anspruch 1 oder 2, wobei die flachen Abschnitte (15) des Mittelfeinschnitts (5) mit den Schulterhauptrillen (3) verbunden sind, und der tiefe Abschnitt (16) des Mittelfeinschnitts (5) die flachen Abschnitte (15) miteinander verbindet.

4. Reifen (1) nach einem der Ansprüche 1 bis 3, wobei jeder der ersten und zweiten Laufflächenprofilabschnitte (P1, P2) zwischen den geneigten Hauptrillen (4), die in der Reifenumfangsrichtung benachbart zueinander sind, eine Verbindungsrille (20) aufweist, die den inneren Endabschnitt (4b) einer geneigten Hauptrille (4) der benachbarten geneigten Hauptrillen (4) mit der anderen geneigten Hauptrille (4) der benachbarten geneigten Hauptrillen (4) verbindet.

5. Reifen (1) nach Anspruch 4, wobei die Verbindungsrille (20) einen ersten Rillenabschnitt (21) aufweist, an dem eine Rillentiefe (H) in Richtung des inneren Endabschnitts (4b) vergrößert ist.

6. Reifen (1) nach einem der Ansprüche 1 bis 5, wobei jede geneigte Hauptrillen (4) an dem äußeren Endabschnitt (4a) einen schmalen Abschnitt (7) aufweist, an dem eine Rillenbreite (W4) verringert ist.

7. Reifen (1) nach einem der Ansprüche 1 bis 6, wobei jede geneigte Hauptrille (4) am äußeren Endabschnitt (4a) einen Vorstandsabschnitt (8) aufweist, der von einem Rillenboden (S) vorsteht.

8. Reifen (1) nach einem der Ansprüche 1 bis 7, wobei jeder der ersten und zweiten Laufflächenprofilabschnitte (P1, P2) zwischen den geneigten Hauptrillen (4), die in der Reifenumfangsrichtung nebeneinander liegen, einen geneigten Feinschnitt (25) aufweist, die sich von der Schulterhauptrille (3) entlang der geneigten Hauptrillen (4) erstreckt.

## Revendications

1. Pneumatique (1) ayant une portion formant bande de roulement dans laquelle une première portion de motif de roulement (P1) prévue sur un côté par rapport à un équateur de pneumatique (C) dans une direction axiale du pneumatique et une seconde portion de motif de roulement (P2) prévue sur un autre côté par rapport à l'équateur de pneumatique (C) dans la direction axiale du pneumatique ont une relation de symétrie ponctuelle, dans lequel
chacune de la première et de la seconde portion de motif de roulement (P1, P2) comprend
une rainure principale d'épaulement (3) s'étendant dans une direction circonférentielle du pneumatique, et
des rainures principales inclinées (4) ayant chacune une portion d'extrémité extérieure (4a) connectée à la rainure principale d'épaulement (3), s'étendant en direction de l'équateur de pneumatique (C) tout en étant inclinées par rapport à la direction circonférentielle du pneumatique, et ayant une portion d'extrémité intérieure (4b) qui se termine sans recouper l'équateur de pneumatique (C), et
ledit pneumatique étant **caractérisé par**
une fente centrale (5) ayant des portions peu profondes (15) et une portion peu profonde (16) qui pénètre entre chaque rainure principale inclinée (4) prévue sur la première portion de motif de roulement (P1), et chaque rainure principale inclinée (4) prévue sur la seconde portion de motif de roulement (P2).

2. Pneumatique (1) selon la revendication 1, dans lequel chaque rainure principale inclinée (4) s'étend en direction de l'équateur de pneumatique (C) cependant qu'un angle θ de celle-ci par rapport à la direction circonférentielle du pneumatique diminue.

3. Pneumatique (1) selon la revendication 1 ou 2, dans lequel les portions peu profondes (15) de la fente centrale (5) sont connectées aux rainures principales d'épaulement (3), et la portion profonde (16) de la fente centrale (5) connecte les portions peu profondes (15) l'une à l'autre.

4. Pneumatique (1) selon l'une quelconque des revendications 1 à 3, dans lequel chacune de la première et de la seconde portion de motif de roulement (P1, P2) possède, entre les rainures principales inclinées (4) adjacentes l'une à l'autre dans la direction circonférentielle du pneumatique, une rainure de connexion (20) qui connecte la portion d'extrémité intérieure (4b) d'une rainure principale inclinée (4) parmi les rainures principales inclinées adjacentes (4) à l'autre rainure principale inclinée (4) parmi les rainures principales inclinées adjacentes (4).

5. Pneumatique (1) selon la revendication 4, dans lequel la rainure de connexion (20) comprend une première portion de rainure (21) au niveau de laquelle une profondeur de rainure (H) augmente en direction de la portion d'extrémité intérieure (4b).

6. Pneumatique (1) selon l'une quelconque des revendications 1 à 5, dans lequel chaque rainure principale inclinée (4) comporte, au niveau de la portion d'extrémité extérieure (4a), une portion étroite (7) au niveau de laquelle une largeur de rainure (W4) est réduite.

7. Pneumatique (1) selon l'une quelconque des revendications 1 à 6, dans lequel chaque rainure principale inclinée (4) possède, au niveau de la portion d'extrémité extérieure (4a), une portion en projection (8) qui se projette depuis un fond de rainure (S).

8. Pneumatique (1) selon l'une quelconque des revendications 1 à 7, dans lequel chacune de la première et de la seconde portion de motif de roulement (P1, P2) comporte, entre les rainures principales inclinées (4) adjacentes l'une à l'autre dans la direction circonférentielle du pneumatique, une fente inclinée (25) qui s'étend depuis la rainure principale d'épaulement (3) le long des rainures principales inclinées (4).
